## Europäisches Patentamt

## European Patent Office

## Office européen des brevets

(11) Veröffentlichungsnummer: **0 153 555**
**B1**

## EUROPÄISCHE PATENTSCHRIFT

(45) Veröffentlichungstag der Patentschrift:
**08.06.88**

(21) Anmeldenummer: **85100174.3**

(22) Anmeldetag: **09.01.85**

(51) Int. Cl.⁴: **G 01 K 5/44,** G 05 D 23/02

(54) **Thermostat.**

(30) Priorität: **11.01.84 DE 3400699**

(43) Veröffentlichungstag der Anmeldung:
**04.09.85 Patentblatt 85/36**

(45) Bekanntmachung des Hinweises auf die Patenterteilung:
**08.06.88 Patentblatt 88/23**

(84) Benannte Vertragsstaaten:
**AT CH DE FR GB IT LI NL SE**

(56) Entgegenhaltungen:
**DE-A-2 931 682**
**DE-U-1 913 112**
**DE-U-1 978 409**
**DE-U-7 603 481**
**FR-A-2 446 931**
**GB-A-2 074 317**
**US-A-2 846 829**

(73) Patentinhaber: **FRIEDRICH GROHE ARMATURENFABRIK GmbH & CO,** Hauptstrasse 137, D-5870 Hemer 1 (DE)

(72) Erfinder: **Kahle, Dieter, Zur Sonnenhöhe 103, D-5860 Iserlohn (DE)**

LIBER, STOCKHOLM 1988

**Beschreibung**

Die Erfindung betrifft einen Thermostat mit den im Oberbegriff des Anspruchs 1 angegebenen Merkmalen.

Bei den bekannten Thermostaten dieser Art (siehe DE-U-1 913 112) ist der Dehnstoff in einer starren, becherförmigen Kapsel eingeschlossen. Der Dehnstoff nimmt hierbei etwa die Form eines massiven Zylinders an, dessen Oberfläche im Verhältnis zu seinem Volumen relativ gering ist. Im Zusammenwirken mit einer relativ schlechten Wärmeleitfähigkeit der gebräuchlichen Dehnstoffe zeigen diese Thermostate ein verhältnismäßig träges Zeitverhalten bzw. eine niedrige Ansprechgeschwindigkeit, was beim Einsatz dieser Thermostate in sanitäre Kalt- und Warmwassermischventile nachteilig ist.

Zur Überwindung dieses Mangels ist bereits vorgeschlagen worden (DE-U-1 913 112) zur besseren Wärmeleitung in dem Dehnstoffgefäß gelochte Scheiben beim Füllen des Gefäßes quer zur Achse des Druckstiftes mit einzubringen. Die Scheiben sollen dabei mit einem umgebördelten Rand versehen sein, mit dem einerseits der Abstand der einzelnen Scheiben zueinander bestimmt werden und andererseits die Wärmeübertragung an die Innenwand des Gefäßes erfolgen soll.

Durch die quer zur Achse des Druckstiftes angeordneten Scheiben in dem Dehnstoffgefäß ist eine Einfüllung des meist wachsartigen Dehnstoffes in Tablettenform vorgesehen, was einen relativ komplizierten Zusammenbau des Thermostats zur Folge hat. Außerdem ist nicht auszuschließen, daß die Scheiben durch die Volumenänderungen des wachsartigen Dehnstoffes beim Thermostatbetrieb in dem Gehäuse verschoben oder gar verformt werden und so mit eine direkte Wärmeleitung zur Gefäßwandung unterbrochen werden kann.

Schließlich stellen die quer zur Ausdehnungsrichtung angeordneten Scheiben ein Hindernis bzw. Reibungswiderstand für eine Volumenänderung des wachsartigen Dehnstoffes dar.

Der Erfindung liegt die Aufgabe zugrunde, einen Thermostaten der im Oberbegriff des Anspruchs 1 angegebenen Gattung zu schaffen, der über einen relativ langen Gebrauchszeitraum eine gleichbleibende hohe Ansprechgeschwindigkeit hat und der mit relativ einfachen Mitteln kostengünstig herstellbar ist.

Diese Aufgabe wird erfindungsgemäß durch die im Anspruch 1 angegebenen Merkmale gelöst.

Weitere Ausgestaltungen der Erfindung sind in den abhängigen Ansprüchen 2 bis 8 angegeben.

Die mit der Erfindung erzielten Vorteile bestehen insbesondere darin, daß durch die Anordnung des einfach zu faltenden, sternförmigen Wärmeleitelements ein außerordentlich guter und störungsfreier Wärmetransport zwischen Dehnstoff und Gehäusewandung erzielt wird.

Die wirksamen Flächen des Wärmeleitelements sind in axialer Richtung angeordnet, so daß die Reibung zwischen dem Dehnstoff und dem Element auf ein Mindestmaß reduziert und außerdem ein reibungsloses Einfüllen des Dehnstoffes in das Gehäuse gewährleistet ist.

Das gefaltete Wärmeleitelement weist in radialer Richtung eine Federwirkung auf, so daß einerseits Maßtoleranzen des Dehnstoffgefäßes ohne weiteres kompensiert werden können und andererseits das Wärmeleitelement durch seine Vorspannung radial gegen die Wandung des Gehäuses gepreßt wird, so daß sichere Kontakte zur Wärmeüberleitung entstehen.

Schließlich kann durch eine einfache Verlötung des beispielsweise aus Kupfer hergestellten Wärmeleitelements an den am Gehäuse anliegenden Flächen ein optimaler Wärmefluß zwischen Dehnstoff und Wandung des Gehäuses hergestellt werden.

Ausführungsbeispiele der Erfindung sind in der Zeichnung im vergrößerten Maßstab dargestellt und werden im folgenden näher beschrieben. Es zeigt

Figur 1    ein Thermostatelement im Längsschnitt;

Figur 2    das Thermostatelement gemäß Figur 1 im Schnitt in der Ebene II;

Figur 3    das Thermostatelement gemäß Figur 2 mit einem anders geformten Wärmeleitelement.

Der Einfachheit halber sind bei den Ausführungsbeispielen in der Zeichnung gleiche oder entsprechende Elemente mit jeweils gleichen Bezugszeichen versehen.

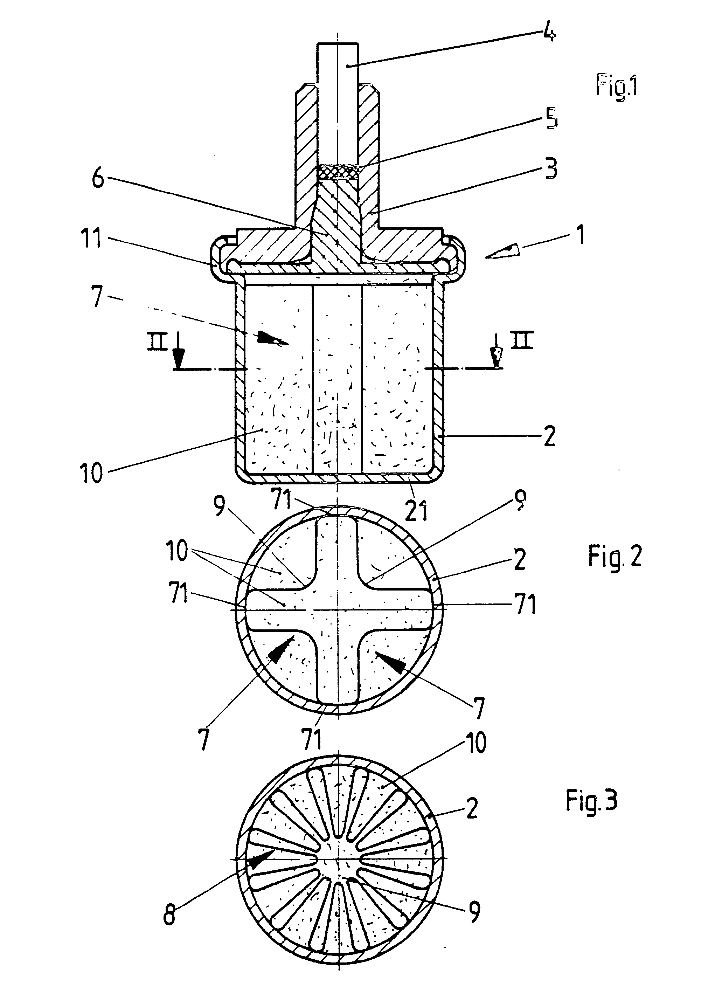

Das in den Figuren 1 und 2 dargestellte Thermostatelement besteht aus einem Gehäuse 1, das aus einem becherförmigen Unterteil 2 und einem eine konzentrische Führung und Halterung für einen Druckstift 4, eine Scheibe 5 und eine Membrane 6 tragenden Oberteil 3 besteht. In dem zylindrischen Unterteil 2 ist ein Wärmeleitelement 7 angeordnet, mit dem der Wärmefluß zwischen der Wand des Unterteils 2 und einem im Gehäuse 1 eingefüllten Dehnstoff 10 beschleunigt wird.

Das Wärmeleitelement ist aus einem dünnwandigen Kupferrohr mittels vier Falten 9 kreuzförmig geformt, so daß alle Bereiche des vom Dehnstoff ausgefüllten Bereiches relativ gleichmäßig von dem Wärmeleitelement erfaßt werden. Das Wärmeleitelement 7 ist dabei mit seinen Spitzen 71 sowie mit der einen Stirnfläche am Boden 21 des Unterteils 2 verlötet. Nach dem Einfüllen des Dehnstoffs in den Unterteil 2 und dem Einlegen der Membrane 6 in den Oberteil 3 werden beide Teile zusammengefügt und mittels eine Bördelansatzes 11 am Unterteil 2 miteinander dicht verbördelt. Treten nun in der Umgebung des so hergestellten Thermostaten Temperaturänderungen auf, so werden diese mit Hilfe des Wärmeleitelements 7 beschleunigt in den Dehnstoff 10 eingeleitet und bewirken somit in kürzester Zeit eine entsprechende Volumenänderung, die die Membrane 6 entsprechend auslenkt und somit den Druckstift 4 verschiebt.

Die Membrane 6 ist in dem Ausführungsbeispiel aus Gummi oder einem ähnlichen Material hergestellt und dient im äußeren Rand gleichzeitig als Dichtung zwischen Unter- und Oberteil 2, 3 im Bereich des Bördelansatzes 11. Anstatt der Gummimembrane kann selbstverständlich auch eine Metallmembrane verwendet werden und z. B. das Oberteil mit dem Unterteil durch eine Verschweißung verbunden sein.

In der Figur 3 ist ein anderes Ausführungsbeispiel eines Wärmeleitelements 8 dargestellt. Das Wärmeleitelement 8 ist dabei als Rosette aus Kupferblech gefaltet, wobei das Flachmaterial im Außenbereich der Wandung des Gehäuses 1 angepaßt ist und eine Vielzahl von radial nach innen gerichteter Falten 9 aufweist. Im übrigen entspricht dieses Ausführungsbeispiel dem in den Figuren 1 und 2 gezeigten.

## Patentansprüche

1. Thermostat für den Einsatz bei sanitären Mischventilen für Kalt- und Warmwasser, mit einem in einem im wesentlichen starren Gehäuse (1) angeordneten Dehnstoff, der auf einen, in einem schaftförmigen Führungsteil längsverschieblich gelagerten Druckstift (4) einwirkt, wobei im Gehäuse (1) in den Dehnstoff ragende Wärmeleitelemente (7, 8) eingesetzt sind, dadurch gekennzeichnet, daß ein oder mehrere sternförmig gefaltete Wärmeleitelemente (7, 8) in das Gehäuse (1) eingefügt sind, derart daß die etwa radial nach innen ragenden Falten (9) der Wärmeleitungselemente (7, 8) im gegenseitigen Abstand und etwa parallel zur Achse des Druckstiftes (4) verlaufen.

2. Thermostat nach Anspruch 1, mit einem etwa zylindrisch geformten Gehäuse zur Aufnahme des Dehnstoffes, dadurch gekennzeichnet, daß die gefalteten Wärmeleitelemente (7, 8) mit Vorspannung in das Gehäuse (1) gedrückt sind.

3. Thermostat nach den Ansprüchen 1 oder 2, dadurch gekennzeichnet, daß die gefalteten Wärmeleitelemente (7, 8) aus Metallblech, insbesondere Kupferblech, geformt sind.

4. Thermostat nach den Ansprüchen 1 oder 2, dadurch gekennzeichnet, daß die gefalteten Wärmeleitelemente (7, 8) aus Metallrohr, insbesondere Kupferrohr, geformt sind.

5. Thermostat nach Anspruch 1, dadurch gekennzeichnet, daß die Wärmeleitelemente (7, 8) an den Anlageflächen mit dem Gehäuse (1) verlötet sind.

6. Thermostat nach Anspruch 1, dadurch gekennzeichnet, daß die Wärmeleitelemente (7, 8) mit dem Boden (21) des Gehäuses (1) verlötet sind.

7. Thermostat nach den Ansprüchen 1 bis 6, dadurch gekennzeichnet, daß das Wärmeleitelement (7) kreuzförmig gefaltet ist und für einen guten Wärmeübergang die Spitzen (71) des Kreuzes entsprechend der Wandung des Gehäuses (1) geformt sind.

8. Thermostat nach den Ansprüchen 1 bis 6, dadurch gekennzeichnet, daß das Wärmeleitelement (8) als Rosette gestaltet ist, wobei das Flachmaterial der Wandung des Gehäuses (1) angepaßt ist und eine Vielzahl von radial nach innen gerichteter Falten (9) aufweist.

## Claims

1. Thermostat for use in sanitary mixing valves for cold and hot water, having an expansible material, arranged in a substantially rigid housing (1), which acts on a press pin (4) mounted in a shaft-like guide member in such a manner that it is longitudinally displaceable, heat-conducting elements (7, 8) being inserted in the housing (1) and projecting into the expansible material, characterised in that one or more heat-conducting elements (7, 8) folded into a star shape are inserted into the housing (1) in such a manner that the folds (9) of the heat-conducting elements (7, 8) that project approximately radially inwards extend at a distance apart, approximately parallel to the axis of the press pin (4).

2. Thermostat according to claim 1, having an approximately cylindrical housing for accommodating the expansible material, characterised in that the folded heat-conducting elements (7, 8) are pushed under stress into the housing (1).

3. Thermostat according to claim 1 or claim 2, characterised in that the folded heat-conducting elements (7, 8) are made of sheet metal, especially copper sheet.

4. Thermostat according to claim 1 or claim 2, characterised in that the folded heat-conducting elements (7, 8) are made of metal tube, especially copper tube.

5. Thermostat according to claim 1, characterised in that the heat-conducting elements (7, 8) are soldered to the housing (1) at the surfaces that rest against the housing.

6. Thermostat according to claim 1, characterised in that the heat-conducting elements (7, 8) are soldered to the floor (21) of the housing (1).

7. Thermostat according to claims 1 to 6, characterised in that the heat-conducting element (7) is folded in the shape of a cross and that for good heat transfer the points (71) of the cross are shaped to fit the wall of the housing (1).

8. Thermostat according to claims 1 to 6, characterised in that the heat-conducting element (8) is in the shape of a rosette, the flat material being made to fit the wall of the housing and having a plurality of folds (9) directed radially inwards.

## Revendications

1. Thermostat pour la mise en oeuvre de vannes de melange sanitaires pour eau froide et eau chaude, comportant une matière dilatable, disposée dans un carter (1) essentiellement rigide, et qui agit sur une tige de pression (4) montée de façon à pouvoir coulisser longitudinalement dans un élément de guidage épousant la forme d'une tige, des éléments conducteurs de chaleur (7, 8) étant insérés dans le carter (1) en pénétrant dans la matière dilatable, thermostat caractérisé en ce que un ou plusieurs éléments conducteurs de chaleur (7, 8) pliés en forme d'étoile sont insérés dans le carter (1) de telle manière, que les plis (9) des éléments conducteurs de chaleur (7, 8) pénètrent vers l'intérieur à peu pres en direction radiale et s'étendent à distance mutuelle les uns des autres et à peu près parallèlement à l'axe de la tige de pression (4).

2. Thermostat selon la revendication 1, comportant un carter, formé en forme à peu près cylindrique, pour recevoir la matière dilatable, thermostat caractérisé en ce que les éléments conducteurs de chaleur pliés (7, 8) sont pressés avec précontrainte dans le carter (1).

3. Thermostat selon les revendications 1 ou 2, caractérisé en ce que les éléments conducteurs de chaleur pliés (7, 8) sont formés à partir de tôle de métal, notamment tôle de cuivre.

4. Thermostat selon les revendications 1 ou 2, caractérisé en ce que les éléments conducteurs de chaleur pliés (7, 8) sont formés à partir de tube de métal, notamment tube de cuivre.

5. Thermostat selon la revendication 1, caractérisé en ce que les éléments conducteurs de chaleur (7, 8) sont brasés sur les surfaces d'appui avec le carter (1).

6. Thermostat selon la revendication 1, caractérisé en ce que les éléments conducteurs de chaleur (7, 8) sont brasés avec le fond (21) du carter (1).

7. Thermostat selon les revendications 1 à 6, caractérisé en ce que l'élément conducteur de chaleur (7) est plié en forme de croix, et pour un bon transfert de chaleur les pointes (71) des branches de la croix sont formées de façon correspondant à la forme de la paroi du carter (1).

8. Thermostat selon les revendications 1 à 6, caractérisé en ce que l'élément conducteur de chaleur (8) est sous forme de rosette, le matériau plat de celle-ci, étant adapté à la paroi du carter (1), et comportant un certain nombre de plis (9) dirigés radialement vers l'intérieur.

Fig.1

Fig. 2

Fig.3